# EUROPEAN PATENT SPECIFICATION

(11) **EP 3 744 966 B1**
(45) Date of publication and mention of the grant of the patent: **07.06.2023**
(21) Application number: 20177596.2
(22) Date of filing: 29.05.2020
(51) Int. Cl.: F02M 35/02, F02M 35/024, B01D 46/00

(54) **AIR FILTER FOR I.C. ENGINES**
LUFTFILTER FÜR VERBRENNUNGSMOTOREN
FILTRE À AIR POUR MOTEURS À COMBUSTION INTERNE

(30) Priority: 30.05.2019 IT 201900007644
(43) Date of publication of application: 02.12.2020
(73) Proprietor: Officine Metallurgiche G. Cornaglia S.p.A., 10092 Beinasco (TO) (IT)
(72) Inventor: BERTUCCI, Nazzareno, 10092 BEINASCO (TO) (IT); CORNAGLIA, Umberto, 10092 BEINASCO (TO) (IT); GOTELLI, Mauro, 10092 BEINASCO (TO) (IT); VITAGLIANI, Paolo, 10092 BEINASCO (TO) (IT)
(74) Representative: Robba, Pierpaolo

(56) References cited:
- EP-A1- 3 000 521
- WO-A1-2018/137813
- DE-A1-102013 000 111
- US-A1- 2016 051 909
- US-A1- 2017 234 278

## Description

### Technical Field

The invention concerns an air filter for internal combustion engines, of the kind including a panel-like filtering cartridge. The air filter according to the invention finds application in the field of filtering oxidising air intended for the combustion chambers of an internal combustion engine, for instance of the kind used on land vehicles.

### Prior Art

In order to purify air entering the intake circuit of an internal combustion engine, it is known to use filtering cartridges having a filtering element made of pleated paper or other filtering material, which are located in a suitable housing closed by a lid. The housing has an inlet opening for dirty air and an outlet opening for the purified air and internally defines a fixed air path, such that the whole transiting dirty air flow leaves the housing only after having flown through the filtering element of the cartridge.

In the intake circuit of an internal combustion engine, usually a considerable pressure difference arises between the portions located upstream and downstream of the cartridge, respectively, with reference to the air flow. This pressure difference is mainly due to the intake circuit being open to the atmosphere upstream of the cartridge and being set to depression conditions downstream of the cartridge, because of the intake phases in the engine cylinders

Moreover, in the field of air filtering for internal combustion engines of land vehicles, the need is particularly felt of having air filters, and hence panel-like filtering cartridges, with a compact size, in particular with a low thickness and a very wide surface.

The filtering cartridge separating the circuit regions at different pressures is thus submitted to forces tending to deform it, by sucking it towards the side located downstream of the cartridge, i.e. towards the internal combustion engine. Due to such forces and to said sizes of the panel-like filtering cartridges (low thickness and wide extension), the cartridges undergo important deformations and vibrations, even of resonant type, which deteriorate them and moreover cause noisiness. Moreover, also the air filter housing and/or lid undergo vibrations, with a consequent noise emission.

In order to limit the drawback of the deformations and vibrations of the panel-like cartridges, the latter may be equipped with a stiffening net or grid located on the side whence filtered air goes out. An example of a cartridge of the above kind is disclosed in document

WO 2018/137813 discloses a filter element with optimized flow control on which the preamble of claim 1 is based.

Yet, the panel-like cartridges of the above kind do not solve in sufficiently adequate manner either the problem of the deformations and vibrations the same cartridges undergo, or the problem of the vibrations of the air filter housing and/or lid.

Thus, it is a first object of the invention to provide an air filter for internal combustion engines, in which the air filter, and hence the panel-like filtering cartridge, meet the size requirements stated above and are more stable than the existing air filters and the respective panel-like filtering cartridges, thereby limiting deformations and vibrations.

It is another object of the invention to provide an air filter capable of limiting pressure drops downstream of the same filter.

The above and other objects are achieved by means of the air filter according to the present invention, as claimed in the appended claims.

### Description of the invention

The air filter for internal combustion engines according to the invention comprises a housing, a lid and a panel-like filtering cartridge located between the housing and the lid.

The housing has an inlet opening for dirty air to be filtered and an outlet opening for the filtered air. Inside the air filter, the housing and the lid define, thanks to suitable gaskets between them and the filtering cartridge, a fixed air path, such that the whole transiting air flow exits through the outlet opening of the housing only after having flown through a pack of filtering material of the cartridge.

The filtering cartridge comprises a first portion of pack of filtering material and a second portion of pack of filtering material, between which there is located a connection element configured for being sealingly connected to both the first portion and the second portion of the pack of filtering material.

The housing of the air filter comprises a support element extending from a housing shell towards a region inside the same housing. The lid has an abutment portion in correspondence of such a support element.

The filtering cartridge further comprises a reinforcing net for the pack of filtering material. The portion that is clamped and pressed between the support element of the housing and the abutment portion of the lid comprises part of the reinforcing net besides part of the intermediate portion of the pack of filtering material.

The support element has a support surface that preferably is substantially planar.

According to a preferred feature of the present invention, the connection element of the filtering cartridge includes a portion clamped, preferably tightly clamped, between the support element of the housing and the abutment portion of the lid. Advantageously, said feature, by creating a non-peripheral constraint for the lid, the housing and the filtering cartridge, allows increasing the stiffness of the whole air filter, thereby limiting deformations and vibrations of cartridge, housing and lid and the resulting noisiness during air intake. More particularly, an increase in the first resonance frequency of the housing/lid assembly is observed.

In accordance with this feature of the invention, the portion of the connection element of the filtering cartridge clamped between the support element of the housing and the abutment portion of the lid, when the cartridge is located in the housing and the lid is closed, is slightly compressed between said support element and the abutment portion, thereby conferring stiffness and stability to the filtering cartridge and reducing the risk of deformations caused by the vibrations the cartridge generally undergoes during normal use.

According to another embodiment of the invention, the filtering cartridge further comprises a reinforcing net for the pack of filtering material. In this embodiment, the portion that is clamped and pressed between the support element of the housing and the abutment portion of the lid comprises part of the reinforcing net besides part of the intermediate portion of the pack of filtering material.

According to a further embodiment of the invention, the filtering cartridge further comprises a reinforcing net, and the connection element between the first portion and the second portion of the pack of filtering material comprises a closed intermediate segment integral with the reinforcing net and sealingly connected with the first portion and the second portion of the pack of filtering material. In this embodiment, the portion clamped between the support element of the housing and the abutment portion of the lid comprises part of the intermediate segment of the reinforcing net.

According to a further embodiment of the invention, the connection element between the first portion and the second portion of the pack of filtering material comprises an intermediate element integral with a sealing gasket of the filtering cartridge. Said intermediate element integral with the gasket extends between two peripheral elements of said sealing gasket. In this embodiment, the portion clamped between the support element of the housing and the abutment portion of the lid comprises part of the intermediate element integral with the sealing gasket.

According to a peculiar aspect of the invention, the clamped portion, when it is part of said closed intermediate segment of the reinforcing net or part of said intermediate element integral with the gasket, preferably has a shape complementary to a support surface of the support element of the housing.

According to another peculiar aspect of the invention, the abutment portion of the lid comprises free ends of ribs of the lid, which preferably cooperate with interference with the clamped portion of said intermediate element integral with the sealing gasket

According to a further peculiar aspect of the invention, the support element of the housing is arranged in front of an inlet opening of the housing and the connection element between the first portion and the second portion of the pack of filtering material extends in front of said inlet opening of the housing. This allows the air flow to enter more readily the air filter, thus causing a reduction of pressure drops downstream of the same air filter.

According to a further peculiar aspect of the invention, the air filter further comprises a fin arranged between the first portion and the second portion of the pack of filtering material in the vicinity of said inlet opening. This allows improving the distribution of the air flow inside the air filter, thus contributing to a further reduction of pressure drops downstream of the same air filter.

The present invention also concerns a filtering cartridge adapted to be housed between a housing and a lid of an air filter, and comprising a first portion of pack of filtering material, a second portion of pack of filtering material and a connection element configured for being sealingly connected to the first portion and to the second portion of the pack of filtering material,

Said connection element includes a portion adapted to be clamped between the housing and the lid of the air filter.

Such a portion adapted to be clamped between the housing and the lid comprises:
- part of an intermediate portion of the pack of filtering material of the filtering cartridge, integral with the first portion and the second portion of the pack of filtering material, or
- part of an intermediate portion of the pack of filtering material of the filtering cartridge, integral with the first portion and the second portion of the pack of filtering material, and part of a reinforcing net of the filtering cartridge; or
- part of an intermediate, closed segment of a reinforcing net of the filtering cartridge; or
- part of an intermediate element integral with a sealing gasket of the filtering cartridge and extending between two peripheral elements of the sealing gasket.

### Brief Description of the Figures

Some preferred embodiments of the invention will be given by way of non-limiting example with reference to the accompanying Figures, in which:
- Fig. 1 is a perspective view of an air filter according to the present invention;
- Fig. 2 is an exploded perspective view of the filter shown in Fig. 1;
- Fig. 3 is a perspective view of the lid of the air filter according to the invention;
- Fig. 4a is a perspective view of a cartridge of the air filter according to a first embodiment of the invention;
- Fig. 4b is a top plan view of the cartridge shown in Fig. 4a;
- Fig. 4c is a cross-sectional view taken along plane A-A of Fig. 4b;
- Fig. 5a is a perspective view of a cartridge of the air filter according to a second embodiment of the invention;
- Fig. 5b is a top plan view of the cartridge shown in Fig. 5a;
- Fig. 5c is a cross-sectional view taken along plane A-A of Fig. 5b;
- Fig. 6a is a perspective view of a cartridge of the air filter according to a third embodiment of the invention;
- Fig. 6b is a top plan view of the cartridge shown in Fig. 6a;
- Fig. 6c is a cross-sectional view taken along plane A-A of Fig. 6b;
- Fig. 7a is a perspective view of a cartridge of the air filter according to a fourth embodiment of the invention;
- Fig. 7b is a top plan view of the cartridge shown in Fig. 7a;
- Fig. 7c is a cross-sectional view taken along plane A-A of Fig. 7b;
- Fig. 8 is a cross-sectional view of the air filter according to the fourth embodiment of the invention, obtained along a longitudinal direction with respect to the support element of the filter housing;
- Fig. 9 is an enlarged view of a detail of Fig. 8;
- Fig. 10 is a cross-sectional view of the air filter according to the fourth embodiment of the invention, obtained along a transverse direction with respect to the support element of the filter housing;
- Fig. 11 is an enlarged view of a detail of Fig. 10.

### Description of some preferred embodiments

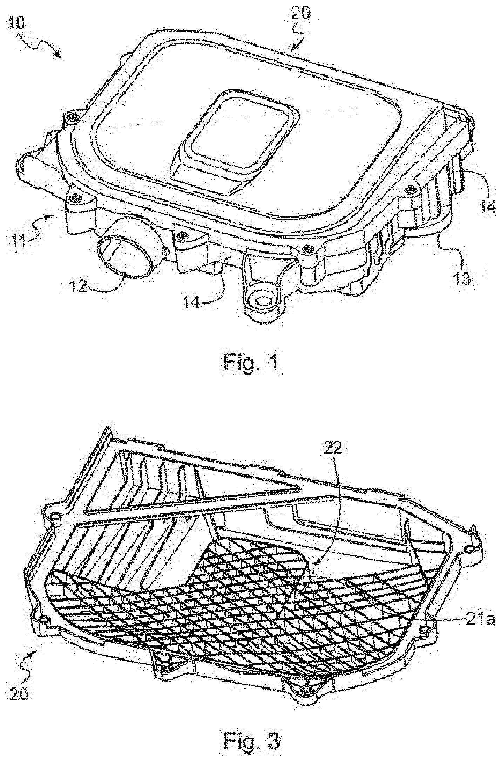

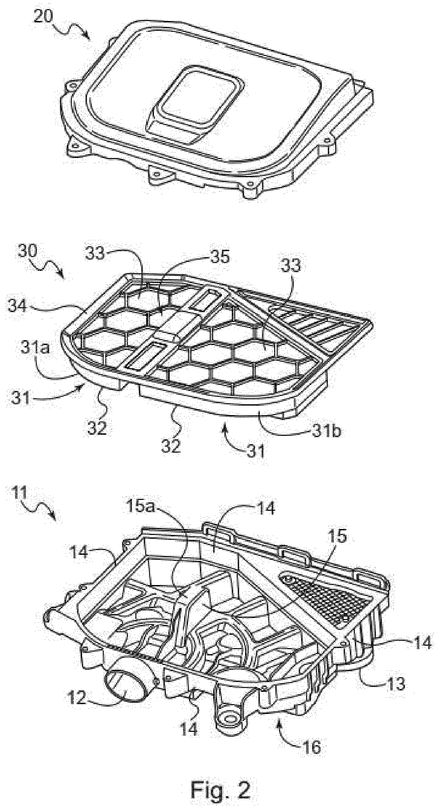

In the accompanying Figures, the air filter for internal combustion engines has been generally denoted by reference numeral 10. Referring in particular to Figs. 1 and 2, air filter 10 according to the invention comprises a housing 11, a lid 20 and a filtering cartridge, generally denoted by reference numeral 30.

Housing 11 has an inlet opening 12 for dirty air to be filtered and an outlet opening 13 for the filtered air. Inside air filter 10, housing 11 and lid 20 define, thanks to suitable gaskets 34 between them and filtering cartridge 30, a fixed air path, such that the whole transiting air flow exits through outlet opening 13 of housing 11 only after having flown through a pack 31 of filtering material of cartridge 30.

Filtering cartridge 30, of the panel-like type, has a pack 31 of filtering material preferably made, in known manner, of pleated paper. In other embodiments, the pack of filtering material can be made of other materials, e.g. a spongy material. In known manner, an upstream face 32 and a downstream face 33, with reference to the air flow direction, are defined on pack 31 of filtering material. There, upstream face 32 is adapted to receive an air flow to be filtered and downstream face 33 is adapted to evacuate air having passed through the filtering material of pack 31 (filtered air), which air is therefore substantially free from impurities that could be harmful for the engine and the other members through which the air flow passes.

Downstream face 33 of the pack 31 of filtering material of cartridge 30 is surrounded by a peripheral sealing gasket 34 of plastic material, e.g. polyurethane foam, adapted to define a corresponding hermetic seal with corresponding surfaces of housing 11 and lid 20.

According to the present invention, the pack 31 of filtering material of cartridge 30 comprises a first portion 31a of pack of filtering material and a second portion 31b of pack of filtering material. As it will be disclosed later on, cartridge 30 further comprises a connection element, generally denoted by reference numeral 35 in Fig. 2, configured for being sealingly connected to the first portion 31a and the second portion 31b of pack 31 of filtering material and preferably having a lower thickness than said first portion 31a and said second portion 31b of pack 31.

Moreover, according to the present invention, housing 11 comprises a support element 15, which extends from an external shell 16 of housing 11 towards a region inside the same housing 11, and which is advantageously arranged in a non-peripheral area of housing 11, i.e. not in the vicinity of peripheral edges 14 of housing 11, and preferably in front of inlet opening 12 of housing 11. Such a support element 15 has a support surface 15a that preferably is substantially planar.

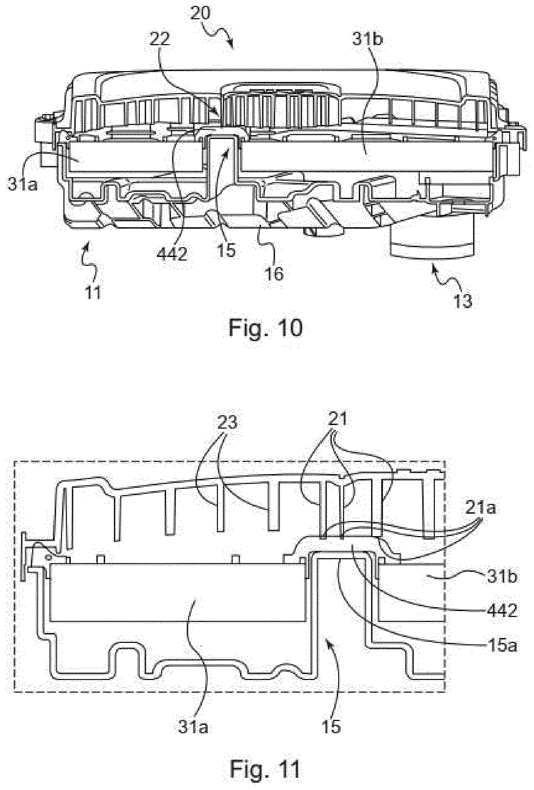

Referring in particular to Figs. 3, 9 and 11, an abutment portion 22 is provided in lid 20 in correspondence of said support element 15 of housing 11. Said portion is formed e.g. by free ends 21a of ribs 21 of lid 20, which ribs are preferably more protruding than other ribs 23 of lid 20. In accordance with a preferred feature of the present invention, support element 15 of housing 11 and abutment portion 22 of lid 20 are configured for being clamped on a portion (described in more detail later on) of connection element 35 of filtering cartridge 30. Thanks to such a feature, a non-peripheral locking point is provided for cartridge 30, forming a further constraint for lid 20, housing 11 and cartridge 30. Such a constraint allows increasing the stiffness of the whole air filter 10, thereby limiting deformations and vibrations of the cartridge, the housing and the lid and the resulting noisiness during air intake.

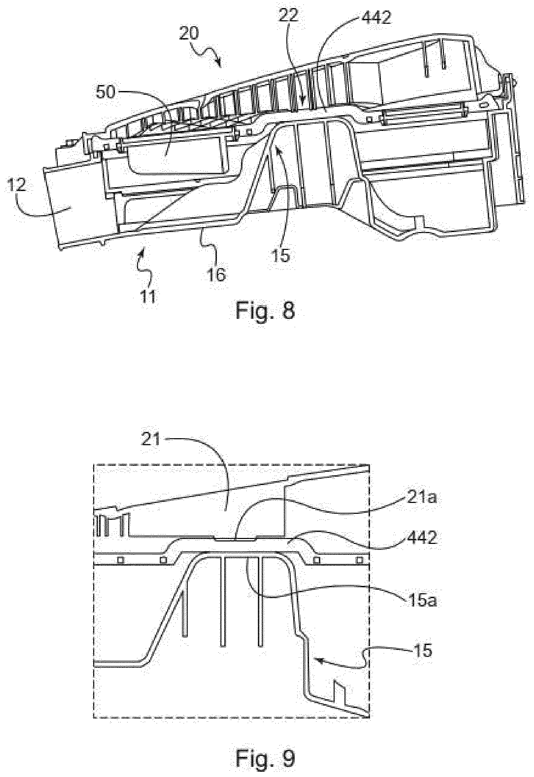

Referring in particular to Figs. 8 to 11, support surface 15a of support element 15 of housing 11 directly contacts the portion of connection element 35 of filtering cartridge 30 clamped between support element 15 and abutment portion 22 of lid 20.

In accordance with this feature, the portion of connection element 35 of filtering cartridge 30 clamped between support element 15 of housing 11 and abutment portion 22 of lid 20 extends over an area that is substantially the same as and preferably complementary to support surface 15a of support element 15.

Moreover, connection element 35 of filtering cartridge 30 preferably extends in front of inlet opening 12 of housing 11, and its lower thickness allows the air flow to enter more readily air filter 10, thus reducing pressure drops downstream of the same air filter 10.

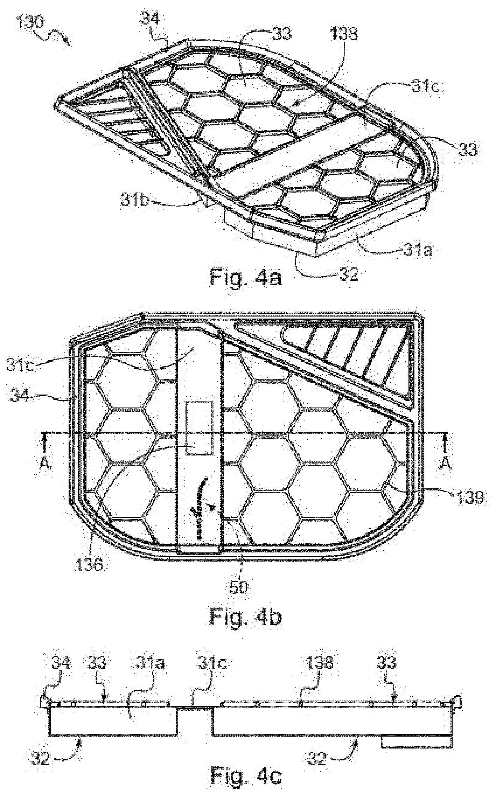

Referring to Figs. 4a, 4b, 4c, in accordance with a first embodiment, filtering cartridge 130 comprises an intermediate portion 31c of pack 31 of filtering material, integral with the first portion 31a and the second portion 31b of pack 31 of filtering material. Such an intermediate portion 31c, forming therefore the connection element between said two portions 31a, 31b of pack 31, is preferably a portion of flat paper or of pleated paper with a pleat depth smaller than that of the first portion 31a and the second portion 31b of pack 31.

In said embodiment, portion 136 clamped between support element 15 of housing 11 and abutment portion 22 of lid 20 is therefore part of intermediate portion 31c of pack 31 of filtering material.

Cartridge 130 according to said embodiment further preferably comprises a reinforcing net or grid 138 located on downstream face 33 of pack 31 of filtering material and preferably made of plastic material. Such a reinforcing net 138 comprises a set of meshes 139 preferably having the same, e.g. hexagonal, geometrical shape. Said reinforcing net 138 contributes to make filtering cartridge 130 stiff and stable.

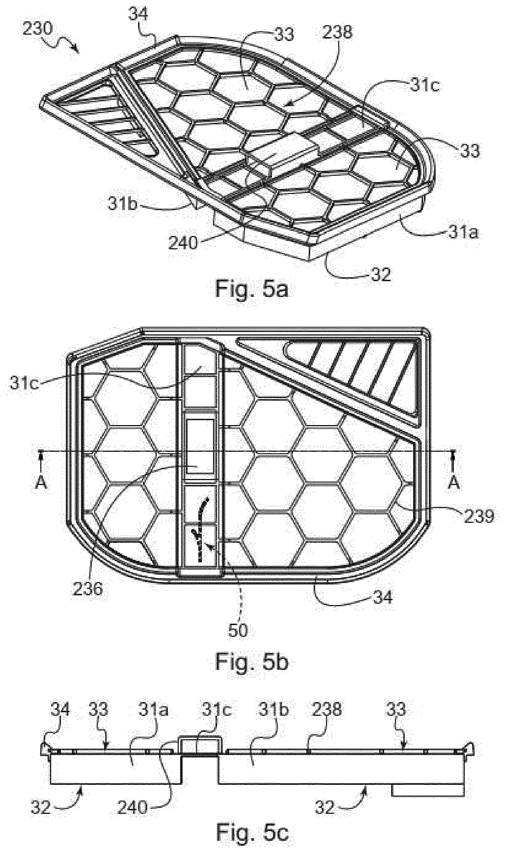

Referring to Figs. 5a, 5b, 5c, in accordance with a second embodiment, filtering cartridge 230 comprises an intermediate portion 31c of pack 31 of filtering material, integral with the first portion 31a and the second portion 31b of pack 31 of filtering material. Such an intermediate portion 31c, forming therefore the connection element between said two portions 31a, 31b of pack 31, is preferably a portion of flat paper or of pleated paper with a pleat depth smaller than that of the first portion 31a and the second portion 31b of pack 31.

Cartridge 230 according to said embodiment further comprises a reinforcing net or grid 238 located on downstream face 33 of pack 31 of filtering material and preferably made of plastic material. Such a reinforcing net 238 comprises a set of meshes 239 preferably having the same, e.g. hexagonal, geometrical shape, and an intermediate portion 240, preferably planar and projecting with respect to the remaining meshes 238, which extends at least in part over intermediate portion 31c of pack 31 of filtering material. Said reinforcing net 238 contributes to make filtering cartridge 230 stiff and stable.

In said embodiment, portion 236 clamped between support surface 15a of housing 11 and abutment portion 22 of lid 20 includes therefore part of intermediate portion 31c of pack 31 of filtering material and part of intermediate portion 240 of reinforcing net 238.

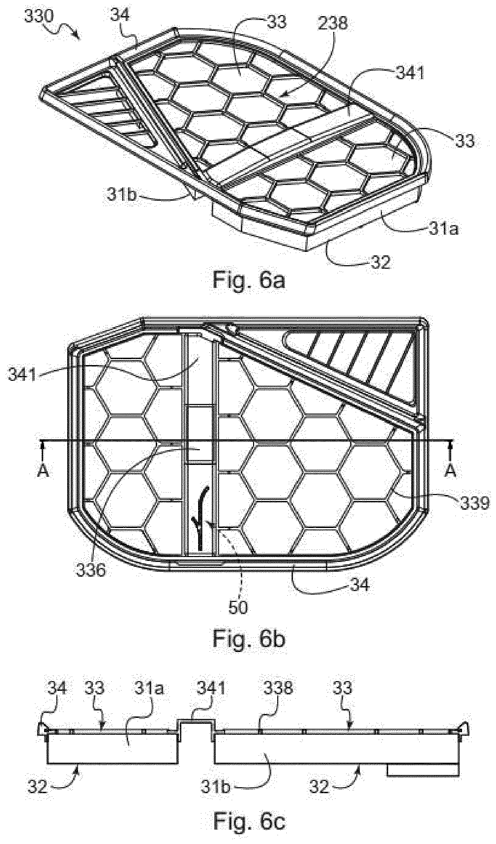

Referring to Figs. 6a, 6b, 6c, in accordance with a third embodiment, filtering cartridge 330 comprises a reinforcing net or grid 338 located on downstream face 33 of pack 31 of filtering material and preferably made of plastic material. Such a reinforcing net 338 includes a set of meshes 339 preferably having the same, e.g. hexagonal, geometrical shape, and a closed (i.e. without openings) and preferably planar intermediate segment 341. Such an intermediate segment 341 is sealingly connected to the first portion 31a and the second portion 31b of pack 31 of filtering material and forms therefore the connection element between said two portions 31a, 31b of pack 31. Said reinforcing net 338 contributes to make filtering cartridge 330 stiff and stable.

In said embodiment, portion 336 clamped between support surface 15a of housing 11 and abutment portion 22 of lid 20 is therefore part of intermediate segment 341 of reinforcing net 338. Preferably, clamped portion 336 of intermediate segment 341 of reinforcing net 338 has a shape complementary to support surface 15a of support element 15 of housing 11 and adapted to be fitted onto such a support surface 15a in order to increase the stability of cartridge 330.

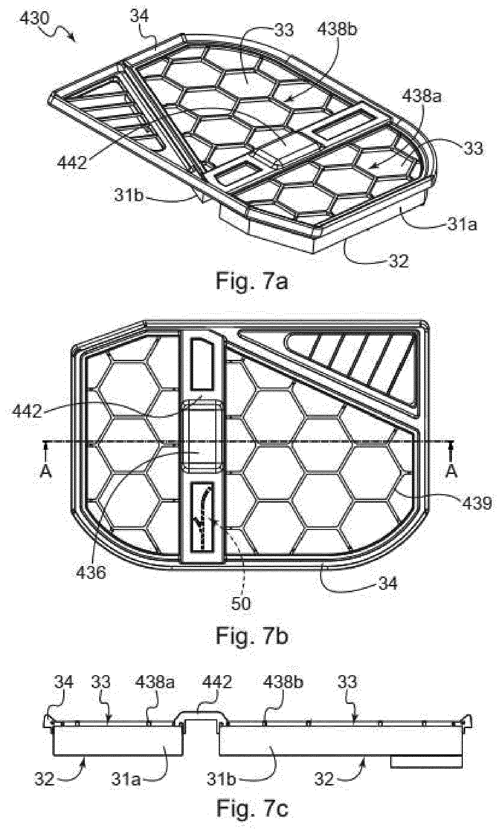

Referring to Figs. 7a, 7b, 7c, in accordance with a fourth embodiment, filtering cartridge 430 comprises an intermediate element 442, integral with sealing gasket 34 and extending between two peripheral elements 34a, 34b of said gasket 34. Such an intermediate element 442 integral with sealing gasket 34 is sealingly connected to the first portion 31a and the second portion 31b of pack 31 of filtering material and forms therefore the connection element between said two portions 31a, 31b of pack 31.

In said embodiment, portion 436 clamped between support surface 15a of housing 11 and abutment portion 22 of lid 20 is therefore part of intermediate element 442 integral with sealing gasket 34. Preferably, clamped portion 436 of intermediate element 442 has a shape complementary to support surface 15a of support element 15 of housing 11 and adapted to be fitted onto such a support surface 15a in order to increase the stability of cartridge 430.

Cartridge 430 according to said embodiment further preferably comprises two reinforcing nets or grids 438a, 438b located on downstream face 33 of the first portion 31a and the second portion 31b, respectively, of pack 31 of filtering material. Such reinforcing nets 438a, 438b, which are preferably made of plastic material, comprise a set of meshes 439 preferably having the same, e.g. hexagonal, geometrical shape. Said reinforcing nets 438a, 438b contribute to make filtering cartridge 430 stiff and stable.

Referring to Figs. 8 to 11, in said embodiment, free ends 21a of ribs 21 of lid 20, forming abutment portion 22 of the same lid, cooperate with interference with clamped portion 436 of intermediate element 442 integral with sealing gasket 34 and partly penetrate into said element.

Air filter 10 in accordance with all embodiments disclosed above further preferably comprises a fin 50 located between the first portion 31a and the second portion 31b of pack 31 of filtering material, in the vicinity of inlet opening 12 of housing 11. Said fin is configured to direct the air flow to be filtered towards said first portion 31a and said second portion 31b of pack 31, thereby improving the distribution of the air flow and thus contributing to reducing pressure drops downstream of air filter 10. Fin 50 is fastened for instance either to reinforcing net 138, 238, 338 of the cartridges, or to intermediate element 442 integral with sealing gasket 34, or to housing 11.

Air filter 10 as described and shown can undergo several changes and modifications.

## Claims

1. Air filter (10) for I.C. engines, comprising a housing (11), a lid (20) and a filtering cartridge (30; 130; 230; 330; 430), said filtering cartridge (30; 130; 230; 330; 430) comprising a first portion (31a) of pack of filtering material (31), a second portion (31b) of pack of filtering material (31) and a connection element (35,31c) configured for being sealingly connected to the first portion (31a) and the second portion (31b) of the pack of filtering material (31),
wherein the housing (11) comprises a support element (15), wherein the lid (20) comprises an abutment portion (22), and wherein the connection element (35) comprises a portion (136; 236; 336; 436) clamped between the support element (15) of the housing (11) and the abutment portion (22) of the lid (20), **characterized in that** the filtering cartridge further comprises a reinforcing net (138,238,438a,438b) for the pack of filtering material (31) and **in that** the portion of the connection element (35,31c) that is clamped and pressed between the support element (15) of the housing (11) and the abutment portion (22) of the lid (20) comprises part of the reinforcing net (138,238,438a,438b) besides part of an intermediate portion of the pack of filtering material.

2. Air filter (10) according to claim 1, wherein said connection element (35) comprises an intermediate portion (31c) of the pack of filtering material (31), integral with the first portion (31a) and the second portion (31b) of the pack of filtering material (31), and wherein the clamped portion (136) comprises part of said intermediate portion (31c) of the pack of filtering material (31).

3. Air filter (10) according to claim 2, wherein the filtering cartridge (230) further comprises a reinforcing net (238), and wherein the clamped portion (236) comprises part of said intermediate portion (31c) of the pack of filtering material (31) and part of said reinforcing net (238).

4. Air filter (10) according to claim 1, wherein the filtering cartridge (330) further comprises a reinforcing net (338), wherein the connection element (35) comprises a closed intermediate segment (341) of said reinforcing net (338), and wherein the clamped portion (336) comprises part of said intermediate segment (341).

5. Air filter (10) according to claim 1, wherein the connection element (35) comprises an intermediate element (442) which is integral with a sealing gasket (34) of the filtering cartridge (430) and extends between two peripheral elements (34a, 34b) of said sealing gasket (34), and wherein said clamped portion (436) comprises part of said intermediate element (442) integral with the sealing gasket (34).

6. Air filter (10) according to claims 4 or 5, wherein the clamped portion (336; 436) has a shape complementary to a support surface (15a) of the support element (15) of the housing (11).

7. Air filter (10) according to any of the preceding claims, wherein the abutment portion (22) of the lid (20) comprises free ends (21a) of ribs (21) of the lid (20).

8. Air filter (10) according to claims 7 and 5, wherein said free ends (21a) of the ribs (21) cooperate with interference with the clamped portion (436) of the intermediate element (442) integral with the sealing gasket (34).

9. Air filter (10) according to any of the preceding claims, wherein the support element (15) of the housing (11) is arranged in front of an inlet opening (12) of the housing (11) and the connection element (35) of the filtering cartridge (30; 130; 230; 330; 430) extends in front of said inlet opening (12).

10. Air filter (10) according to claim 9, further comprising a fin (50) arranged between the first portion (31a) and the second portion (31b) of the pack of filtering material (31) in the vicinity of said inlet opening (12).

11. Air filter (10) according to any of the preceding claims, wherein said support element (15) extends from an external shell (16) of the housing (11) towards a region inside the same housing (11) and is arranged in a non-peripheral area of the housing (11).

12. Air filter (10) according to any of the preceding claims, wherein said support element (15) has a substantially planar support surface (15a).

13. Air filter (10) according to claim 12, wherein said portion (136; 236; 336; 436) clamped between the support element (15) of the housing (11) and the abutment portion (22) of the lid (20) is slightly compressed when the lid (20) is closed.

14. Filtering cartridge (30; 130; 230; 330; 430) for an air filter (10) as claimed in any of claims 1 to 13, said filtering cartridge being adapted to be housed between the housing (11) and the lid (20) of the air filter (10) and comprising a first portion (31a) of pack of filtering material (31), a second portion (31b) of pack of filtering material (31) and a connection element (35,31c) sealingly connected to the first portion (31a) and to the second portion (31b) of the pack of filtering material (31),
wherein the connection element (35,31c) comprises a portion (136; 236; 336; 436) adapted to be clamped between the support element (15) of the housing (11) and the abutment portion (22) of the lid (20) of the air filter (10), **characterized in that** the filtering cartridge further comprises a reinforcing net (138,238,438a,438b) for the pack of filtering material (31) and **in that** the portion of the connection element (35,31c) for being clamped and pressed between the support element (15) of the housing (11) and the abutment portion (22) of the lid (20) comprises part of the reinforcing net (138,238,438a,438b) besides part of an intermediate portion of the pack of filtering material.

15. Filtering cartridge (30; 130; 230; 330; 430) according to claim 14, wherein said portion adapted to be clamped between the housing (11) and the lid (20) of the air filter (10) comprises:
- part of an intermediate portion (31c) of the pack of filtering material (31) of the filtering cartridge (130), integral with the first portion (31a) and the second portion (31b) of the pack of filtering material (31), or
- part of an intermediate portion (31c) of the pack of filtering material (31) of the filtering cartridge (230), integral with the first portion (31a) and the second portion (31b) of the pack of filtering material (31), and part of a reinforcing net (238) of the filtering cartridge (230); or
- part of an intermediate, closed segment (341) of a reinforcing net (338) of the filtering cartridge (330); or
- part of an intermediate element (442) which is integral with a sealing gasket (34) of the filtering cartridge (430) and extends between two peripheral elements (34a, 34b) of said sealing gasket (34).

## Patentansprüche

1. Luftfilter (10) für Verbrennungsmotoren, mit einem Gehäuse (11), einem Deckel (20) und einer Filterkartusche (30; 130; 230; 330; 430), wobei die Filterkartusche (30; 130; 230; 330; 430) einen ersten Teil (31a) eines Packens Filtermaterial (31), einen zweiten Teil (31b) eines Packens Filtermaterial (31) und ein Verbindungselement (35, 31c) aufweist, das dafür ausgelegt ist, dichtend mit dem ersten Teil (31a) und dem zweiten Teil (31b) des Packens Filtermaterial (31) verbunden zu sein,
wobei das Gehäuse (11) ein Stützelement (15) aufweist, wobei der Deckel (20) einen Anschlagabschnitt (22) aufweist und wobei das Verbindungselement (35) einen Abschnitt (136; 236; 336; 436) aufweist, der zwischen dem Trägerelement (15) des Gehäuses (11) und dem Anschlagabschnitt (22) des Deckels (20) eingeklemmt ist, **dadurch gekennzeichnet, dass** die Filterkartusche zudem ein verstärkendes Netz (138, 238, 438a, 438b) für den Packen Filtermaterial (31) aufweist und dass der Abschnitt des Verbindungselements (35, 31c), der zwischen dem Trägerelement (15) des Gehäuses (11) und dem Anschlagabschnitt (22) des Deckels (20) eingeklemmt und verpresst ist, einen Teil des verstärkenden Netzes (138, 238, 438a, 438b) neben einem Teil eines mittleren Abschnitts des Packens Filtermaterial aufweist.

2. Luftfilter (10) nach Anspruch 1, wobei das Verbindungselement (35) einen Zwischenabschnitt (31c) des Packens Filtermaterial (31) aufweist, der integral mit dem ersten Teil (31a) und dem zweiten Teil (31b) des Packens Filtermaterial (31) ist, und wobei der eingeklemmte Abschnitt (136) einen Teil des Zwischenabschnitts (31c) des Packens Filtermaterial (31) aufweist.

3. Luftfilter (10) nach Anspruch 2, wobei die Filterkartusche (230) zudem ein verstärkendes Netz (238) aufweist und wobei der eingeklemmte Abschnitt (236) einen Teil dieses Zwischenabschnitts (31c) des Packens Filtermaterial (31) und einen Teil des verstärkenden Netzes (238) aufweist.

4. Luftfilter (10) nach Anspruch 1, wobei die Filterkartusche (330) zudem ein verstärkendes Netz (338) aufweist, wobei das Verbindungselement (35) ein geschlossenes Zwischensegment (341) des verstärkenden Netzes (338) aufweist, und wobei der eingeklemmte Abschnitt (336) einen Teil des Zwischensegments (341) aufweist.

5. Luftfilter (10) nach Anspruch 1, wobei das Verbindungselement (35) ein Zwischenelement (442) aufweist, das integral mit einer Dichtung (34) der Filterkartusche (430) ist und sich zwischen zwei peripheren Elementen (34a, 34b) der Dichtung (34) erstreckt, und wobei der eingeklemmte Abschnitt (436) einen Teil des Zwischenelements (442), das Integral mit der Dichtung (34) ist, aufweist.

6. Luftfilter (10) nach Anspruch 4 oder 5, wobei der eingeklemmte Abschnitt (336; 436) eine Form hat, die zu einer Trägerfläche (15a) des Trägerelements (15) des Gehäuses (11) komplementär ist.

7. Luftfilter (10) nach einem der vorstehenden Ansprüche, wobei der Anschlagabschnitt (22) des Deckels (20) freie Enden (21a) von Rippen (21) des Deckels (20) aufweist.

8. Luftfilter (10) nach Anspruch 7 und 5, wobei die freien Enden (21a) der Rippen (21) mit Überlagerung mit dem eingeklemmten Abschnitt (436) des Zwischenelements (442) zusammenwirken, das integral mit der Dichtung (34) ist.

9. Luftfilter (10) nach einem der vorstehenden Ansprüche, wobei das Trägerelement (15) des Gehäuses (11) vor einer Einlassöffnung (12) des Gehäuses (11) angeordnet ist und das Verbindungselement (35) der Filterkartusche (30; 130; 230; 330; 430) sich vor der Einlassöffnung (12) erstreckt.

10. Luftfilter (10) nach Anspruch 9, zusätzlich mit einer Rippe (50), die zwischen dem ersten Teil (31a) und dem zweiten Teil (31b) des Packens Filtermaterial (31) in der Nachbarschaft der Einlassöffnung (12) angeordnet ist.

11. Luftfilter (10) nach einem der vorstehenden Ansprüche, wobei das Trägerelement (15) sich von einer äußeren Schale (16) des Gehäuses (11) zu einem Bereich innerhalb des Gehäuses (11) hin erstreckt und in einem nicht peripheren Bereich des Gehäuses (11) angeordnet ist.

12. Luftfilter (10) nach einem der vorstehenden Ansprüche, wobei das Trägerelement (15) eine im Wesentlichen ebene Trägerfläche (15a) hat.

13. Luftfilter (10) nach Anspruch 12, wobei der Abschnitt (136; 236; 336; 436), der zwischen dem Trägerelement (15) des Gehäuses (11) und dem Anschlagabschnitt (22) des Deckels (20) eingeklemmt ist, etwas zusammengedrückt ist, wenn der Deckel (20) geschlossen ist.

14. Filterkartusche (30; 130; 230; 330; 430) für einen Luftfilter (10) nach einem der Ansprüche 1 bis 13, wobei die Filterkartusche dafür ausgelegt ist, zwischen dem Gehäuse (11) und dem Deckel (20) des Luftfilters (10) aufgenommen zu werden und einen ersten Teil (31a) eines Packens Filtermaterial (31), einen zweiten Teil (31b) eines Packens Filtermaterial (31) und ein Verbindungselement (35, 31c) aufweist, das dichtend mit dem ersten Teil (31a) und dem zweiten Teil (31b) des Packens Filtermaterial (31) verbunden ist,
wobei das Verbindungselement (35, 31c) einen Abschnitt (136; 236; 336; 436) aufweist, der dafür ausgelegt ist, zwischen dem Trägerelement (15) des Gehäuses (11) und dem Anschlagabschnitt (22) des Deckels (20) des Luftfilters (10) eingeklemmt zu werden, **dadurch gekennzeichnet, dass** die Filterkartusche zudem ein verstärkendes Netz (138, 238, 438a, 438b) für den Packen Filtermaterial (31) aufweist und dass der Abschnitt des Verbindungselements (35, 31c) zum Einklemmen und Verpressen zwischen dem Trägerelement (15) des Gehäuses (11) und dem Anschlagabschnitt (22) des Deckels (20) einen Teil des verstärkenden Netzes (138, 238, 438a, 438b) neben einem Teil eines Zwischenabschnitts des Packens Filtermaterial aufweist.

15. Filterkartusche (30; 130; 230; 330; 430) nach Anspruch 14, wobei der zum Einklemmen zwischen dem Gehäuse (11) und dem Deckel (20) des Luftfilters (10) ausgelegte Abschnitt aufweist:
- einen Teil eines Zwischenabschnitts (31c) des Packens Filtermaterial (31) der Filterkartusche (130) der integral mit dem ersten Teil (31a) und dem zweiten Teil (31b) des Packens Filtermaterial (31) ist, oder
- einen Teil eines Zwischenabschnitts (31c) des Packens Filtermaterial (31) der Filterkartusche (230), der integral mit dem ersten Teil (31a) und dem zweiten Teil (31b) des Packens Filtermaterial (31) und einem Teil eines verstärkenden Netzes (238) der Filterkartusche (230) ist, oder
- einen Teil eines mittleren, geschlossenen Abschnitts (341) des verstärkenden Netzes (338) der Filterkartusche (330), oder
- einen Teil eines Zwischenelements (442), der mit einer Dichtung (34) der Filterkartusche (430) integral ist und sich zwischen zwei peripheren Elementen (34a, 34b) der Dichtung (34) erstreckt.

## Revendications

1. Filtre à air (10) pour moteurs à combustion interne, comprenant un boîtier (11), un couvercle (20) et une cartouche filtrante (30 ; 130 ; 230 ; 330 ; 430), ladite cartouche filtrante (30 ; 130 ; 230 ; 330 ; 430) comprenant une première portion (31a) de paquet de matériau filtrant (31), une deuxième portion (31b) de paquet de matériau filtrant (31) et un élément de connexion (35, 31c) configuré pour être connecté de manière étanche à la première portion (31a) et la deuxième portion (31b) du paquet de matériau filtrant (31),
dans lequel le boîtier (11) comprend un élément de support (15),
dans lequel le couvercle (20) comprend une portion de butée (22), et
dans lequel l'élément de connexion (35) comprend une portion (136 ; 236 ; 336 ; 436) enserrée entre l'élément de support (15) du boîtier (11) et la portion de butée (22) du couvercle (20), **caractérisé en ce que** la cartouche filtrante comprend, en outre, un filet de renforcement (138, 238, 438a, 438b) pour le paquet de matériau filtrant (31) et **en ce que** la portion de l'élément de connexion (35, 31c) qui est enserrée et pressée entre l'élément de support (15) du boîtier (11) et la portion de butée (22) du couvercle (20) comprend une partie du filet de renforcement (138, 238, 438a, 438b) en plus d'une partie d'une portion intermédiaire du paquet de matériau filtrant.

2. Filtre à air (10) selon la revendication 1, dans lequel ledit élément de connexion (35) comprend une portion intermédiaire (31c) du paquet de matériau filtrant (31), solidaire de la première portion (31a) et de la deuxième portion (31b) du paquet de matériau filtrant (31), et dans lequel la portion enserrée (136) comprend une partie de ladite portion intermédiaire (31c) du paquet de matériau filtrant (31).

3. Filtre à air (10) selon la revendication 2, dans lequel la cartouche filtrante (230) comprend, en outre, un filet de renforcement (238), et dans lequel la portion enserrée (236) comprend une partie de ladite portion intermédiaire (31c) du paquet de matériau filtrant (31) et une partie dudit filet de renforcement (238).

4. Filtre à air (10) selon la revendication 1, dans lequel la cartouche filtrante (330) comprend, en outre, un filet de renforcement (338), dans lequel l'élément de connexion (35) comprend un segment intermédiaire fermé (341) dudit filet de renforcement (338), et dans lequel la portion enserrée (336) comprend une partie dudit segment intermédiaire (341).

5. Filtre à air (10) selon la revendication 1, dans lequel l'élément de connexion (35) comprend un élément intermédiaire (442) qui est solidaire d'un joint d'étanchéité (34) de la cartouche filtrante (430) et qui s'étend entre deux éléments périphériques (34a, 34b) dudit joint d'étanchéité (34), et dans lequel ladite portion enserrée (436) comprend une partie dudit élément intermédiaire (442) solidaire du joint d'étanchéité (34).

6. Filtre à air (10) selon les revendications 4 ou 5, dans lequel la portion enserrée (336 ; 436) présente une forme complémentaire à une surface de support (15a) de l'élément de support (15) du boîtier (11).

7. Filtre à air (10) selon l'une quelconque des revendications précédentes, dans lequel la portion de butée (22) du couvercle (20) comprend des extrémités libres (21a) de nervures (21) du couvercle (20).

8. Filtre à air (10) selon les revendications 7 et 5, dans lequel lesdites extrémités libres (21a) des nervures (21) coopèrent avec interférence avec la portion enserrée (436) de l'élément intermédiaire (442) solidaire du joint d'étanchéité (34).

9. Filtre à air (10) selon l'une quelconque des revendications précédentes, dans lequel l'élément de support (15) du boîtier (11) est disposé devant une ouverture d'entrée (12) du boîtier (11) et l'élément de connexion (35) de la cartouche filtrante (30 ; 130 ; 230 ; 330 ; 430) s'étend devant ladite ouverture d'entrée (12).

10. Filtre à air (10) selon la revendication 9, comprenant, en outre, une ailette (50) disposée entre la première portion (31a) et la deuxième portion (31b) du paquet de matériau filtrant (31) à proximité de ladite ouverture d'entrée (12).

11. Filtre à air (10) selon l'une quelconque des revendications précédentes, dans lequel ledit élément de support (15) s'étend depuis une coque externe (16) du boîtier (11) vers une région à l'intérieur du même boîtier (11) et est disposé dans une zone non périphérique du boîtier (11).

12. Filtre à air (10) selon l'une quelconque des revendications précédentes, dans lequel ledit élément de support (15) présente une surface de support (15a) sensiblement plane.

13. Filtre à air (10) selon la revendication 12, dans lequel ladite portion (136 ; 236 ; 336 ; 436) enserrée entre l'élément de support (15) du boîtier (11) et la portion de butée (22) du couvercle (20) est légèrement comprimée lorsque le couvercle (20) est fermé.

14. Cartouche filtrante (30 ; 130 ; 230 ; 330 ; 430) pour un filtre à air (10) selon l'une quelconque des revendications 1 à 13, ladite cartouche filtrante étant adaptée pour être reçue entre le boîtier (11) et le couvercle (20) du filtre à air (10) et comprenant une première portion (31a) de paquet de matériau filtrant (31), une deuxième portion (31b) de paquet de matériau filtrant (31) et un élément de connexion (35, 31c) connecté de manière étanche à la première portion (31a) et à la deuxième portion (31b) du paquet de matériau filtrant (31),
dans laquelle l'élément de connexion (35, 31c) comprend une portion (136 ; 236 ; 336 ; 436) adaptée pour être enserrée entre l'élément de support (15) du boîtier (11) et la portion de butée (22) du couvercle (20) du filtre à air (10), **caractérisée en ce que** la cartouche filtrante comprend, en outre, un filet de renforcement (138, 238, 438a, 438b) pour le paquet de matériau filtrant (31) et **en ce que** la portion de l'élément de connexion (35, 31c) destinée à être enserrée et pressée entre l'élément de support (15) du boîtier (11) et la portion de butée (22) du couvercle (20) comprend une partie du filet de renforcement (138, 238, 438a, 438b) en plus d'une partie d'une portion intermédiaire du paquet de matériau filtrant.

15. Cartouche filtrante (30 ; 130 ; 230 ; 330 ; 430) selon la revendication 14, dans laquelle ladite portion adaptée pour être enserrée entre le boîtier (11) et le couvercle (20) du filtre à air (10) comprend :
- une partie d'une portion intermédiaire (31c) du paquet de matériau filtrant (31) de la cartouche filtrante (130), solidaire de la première portion (31a) et de la deuxième portion (31b) du paquet de matériau filtrant (31) ; ou
- une partie d'une portion intermédiaire (31c) du paquet de matériau filtrant (31) de la cartouche filtrante (230), solidaire de la première portion (31a) et de la deuxième portion (31b) du paquet de matériau filtrant (31), et une partie d'un filet de renforcement (238) de la cartouche filtrante (230) ; ou
- une partie d'un segment intermédiaire fermé (341) d'un filet de renforcement (338) de la cartouche filtrante (330) ; ou
- une partie d'un élément intermédiaire (442) qui est solidaire d'un joint d'étanchéité (34) de la cartouche filtrante (430) et qui s'étend entre deux éléments périphériques (34a, 34b) dudit joint d'étanchéité (34).
